(19) **Europäisches Patentamt**

**European Patent Office**

**Office européen des brevets**

(11) **EP 1 640 384 A1**

(12) **EUROPEAN PATENT APPLICATION**
published in accordance with Art. 158(3) EPC

(43) Date of publication:
**29.03.2006 Bulletin 2006/13**

(51) Int Cl.:
**C08F 2/00** (1974.07)  **A61F 13/53** (2000.01)

(21) Application number: **04733969.2**

(22) Date of filing: **19.05.2004**

(86) International application number:
**PCT/JP2004/007144**

(87) International publication number:
**WO 2004/101625 (25.11.2004 Gazette 2004/48)**

(84) Designated Contracting States:
**DE**

(30) Priority: **19.05.2003 JP 2003140216**

(71) Applicant: **MITSUBISHI CHEMICAL CORPORATION**
**Tokyo 108-0014 (JP)**

(72) Inventors:
• **HIMORI, Shunichi,**
**MITSUBISHI CHEMICAL CORPORATION**
**Yokkaichi-shi,**
**Mie 510-8530 (JP)**

• **ITOH, Kiichi,**
**MITSUBISHI CHEMICAL CORPORATION**
**Yokkaichi-shi,**
**Mie 510-8530 (JP)**

(74) Representative: **Zimmermann, Gerd Heinrich et al**
**Zimmermann & Partner**
**Postfach 33 09 20**
**D-80069 München (DE)**

(54) **PROCESS FOR PRODUCTION OF WATER-ABSORBING COMPOSITES**

(57)    Disclosed is a method comprising bringing droplets of an aqueous solution of a polymerizable monomer into contact with a fibrous substrate with polymerizing the monomer to thereby fix a water-absorbing resin particle precursor to the fibrous substrate, then adding thereto an aqueous solution of a crosslinking agent in such a manner that the temperature of the water-absorbing resin particle precursor is 60°C or lower after the addition, and heating the precursor composite in an atmosphere at 90°C or higher within 2 minutes after the addition to thereby crosslink the precursor. This method can provide a water-absorbing composite having asufficient water-absorbing capacity under pressure and an excellent water-holding capacity.

Fig.1

EP 1 640 384 A1

**Description**

FIELD OF THE INVENTION

The present invention relates to a process for producing a water-absorbing composite that comprises water-absorbing resin particles having a large water-absorbing capacity, fixed to a fibrous substrate such as nonwoven fabric. The water-absorbing composite is used as a material for so-called paper diapers, etc.

DESCRIPTION OF THE BACKGROUND

A large quantity of so-called paper diapers are used, comprising water-absorbing resin particles as the main water-absorbing element thereof.

Paper diapers used at present have a structure essentially comprising a pulp sheet laid on a water-impervious film such as polyethylene film, water-absorbing resin particles scattered on it, and a pulp sheet further laid on it, in which the water-absorbing resin particles are sandwiched between the pulp layers.

One problem with the paper diaper having the structure is that the water-absorbing resin particles therein are apt to move between the pulp layers and the distribution of the water-absorbing resin particles is apt to be uneven.

To solve this problem, there is proposed a method of dropping droplets of an aqueous solution of a polymerizable monomer on a substrate such as nonwoven fabric with polymerizing the monomer to thereby make the droplets adhere to the substrate (see JP-A 9-67403, 2000-301644, 2000-328456, 11-93073). The particles being polymerized are sticky, and the particles dropped on the substrate adhere to the substrate owing to their adhesive force. In addition, the particles being polymerized are often soft, and therefore, when the particles are dropped on a substrate, the fibers constituting the substrate may cut into the particles and the fibers are wrapped by the particles at least partly in the thickness direction of the fibers. In case where the polymerization is completed in that situation, a water-absorbing composite may be obtained in which the water-absorbing resin particles are fixed to the fibrous substrate, and when this is combined with a polyethylene film and a pulp sheet to fabricate a paper diaper, then the resulting paper diaper may contain the water-absorbing resin particles not moving inside it.

The necessary requirements of water-absorbing resin particles used in paper diapers are that they have a large water-absorbing capacity so that they may absorb a large amount of urine and, in addition, even though the water-absorbing resin particles that have absorbed urine and have swollen are pressed to bodies, they do not separate and release the urine absorbed by them. One method for satisfying the requirements comprises increasing the crosslinking density of resin particles and increasing the strength of resin particles so that the resin particles are not crushed even though pressed. However, when the crosslinking density thereof is increased, then the resin particles could not well swell when they have absorbed water, and the water-absorbing capacity of the resin particles may lower. In order that resin particles may have a large water-absorbing capacity and that swollen resin particles may not separate water even when pressed, there is proposed a method of reacting resin particles with an external crosslinking agent to thereby make the surface of the resulting resin particles crosslinked to a high density. However, when the surface of resin particles is brought into contact with a crosslinking agent, then the crosslinking agent may penetrate into the depth of the resin particles, and therefore it is in fact impossible to selectively crosslink only the surface of the resin particles unless any specific method for it is employed.

JP-A 2000-328456 describes a method of producing a water-absorbing composite having a large water-absorbing capacity under no pressure and even under pressure, which comprises reacting resin particles with an ethanol solution of a crosslinking agent in the presence of water in an amount of from 1 to 100 parts by weight relative to 100 parts by weight of the resin particles to be crosslinked. The method described in the patent publication is excellent in that it gives a water-absorbing composite favorable for a material of paper diapers, etc., but from the industrial viewpoint, more preferred is a method of using an aqueous solution of a crosslinking agent to give the same water-absorbing composite. Accordingly, the present invention is to provide a method for producing a water-absorbing composite having a large water-absorbing capacity under no pressure and even under pressure, which comprises using an aqueous solution of a crosslinking agent.

DISCLOSURE OF THE INVENTION

We, the present inventors have assiduously studied and, as a result, have found that, when the system temperature is controlled during or after adding an aqueous solution of a crosslinking agent to the system, then a water-absorbing composite having desired propertiescan beproduced efficiently, and have reached the present invention. The invention provides a method for producing a water-absorbing composite comprising a fibrous substrate and water-absorbing resin particles fixed thereto, which comprises bringing droplets of an aqueous solution of a polymerizable monomer into contact with a fibrous substrate with polymerizing the monomer to thereby form a precursor composite comprising a water-absorbing resin particle precursor fixed to the fibrous substrate, then adding thereto an aqueous solution of a crosslinking agent in such a manner that the temperature of the water-absorbing resin particle precursor is 60°C or lower after the addition, and heating the precursor composite in an atmosphere at 90°C or higher within 2 minutes after the addition to thereby crosslink the precursor.

According to the production method of the invention, an aqueous solution of a crosslinking agent is used and a water-absorbing composite having a large water-absorbing capacity under no pressure and even under pressure can be produced. Concretely, a water-absorbing composite that comprises a fibrous substrate and water-absorbing resin particles fixed thereto and has a water-holding ability of at least 30 g/g and a water-absorbing ability under pressure of at least 20 g/g (load 100 g - the same shall apply hereinunder) can be produced efficiently.

Not adhering to any theory, we, the present inventors believe that the excellent water-holding capacity and water-absorbing capacity under pressure may be attained by the formation of fine "wrinkles" in the surface of the water-absorbing resin particles through the crosslinking reaction under rapid heating and by the formation of fine pores in the water-absorbing resin particles. The formation of wrinkles is accompanied by the increase in the surface area of the particles and therefore contributes to the increase in the water-absorbing speed of the particles, and the formation of fine pores contributes to the increase in the water-absorbing speed and the liquid permeability of the particles and also to the increase in the liquid-absorbing capacity of the particles of absorbing viscous liquid such as blood.

BRIEF DESCRIPTION OF THE DRAWINGS

Fig. 1 is an outline view of describing nozzles used for producing a water-absorbing composite.
Fig. 2 is a device for determining a water-absorbing capacity under pressure. In the drawing, 1 is a sample disc to be analyzed, 2 is a cylinder equipped with a metal gauze, 3 is a laboratory dish, and 4 is a weight.

DETAILED DESCRIPTION OF THE INVENTION

The method for producing a water-absorbing composite of the invention is described in detail hereinunder with reference to some preferred embodiments thereof. In this description, the numerical range expressed by the wording "a number to another number" means the range that falls between the former number indicating the lowermost limit of the range and the latter number indicating the uppermost limit thereof.

In the method for producing a water-absorbing composite of the invention, the step of bringing droplets of an aqueous solution of a polymerizable monomer into contact with a fibrous substrate with polymerizing the monomer to form a water-absorbing resin particle precursor, thereby forming a precursor composite comprising the water-absorbing resin particle precursor fixed to the fibrous substrate may be effected in any known manner. For example, when a nonwoven fabric is used as the fibrous material, then the step may be effected according to the method described in JP-A 2000-328456. On the other hand, when the fibrous substrate is fibers as they are, then the step may be effected according to the method described in JP-A 11-93073. The polymerizable monomer may be any and every one that is known useful for the intended application and can react with a crosslinking agent. If desired, different polymerizable monomers may be used as combined. In this case, all the monomers may not be reactive with a crosslinking agent. Most popular examples of the polymerizable monomer are unsaturated carboxylic acid, especially acrylic acid, which are preferably used in the invention. As well known, it is desirable that the unsaturated carboxylic acids for use herein are partially neutralized, and generally at least 20% of the carboxyl group thereof may be saturated with sodium hydroxide or the like. For increasing the strength of the water-absorbing resin particles to be formed from the monomer, a small amount of a crosslinking agent such as ethylene glycol diacrylate or N,N'-methylenebisacrylamide capable of copolymerizing with the monomer may be added, if desired, to the aqueous solution of the polymerizable monomer.

A polymerization initiator is generally used for initiating the polymerization of the polymerizable monomer. For the polymerization initiator, herein usable is a polymerization initiator composition that comprises an oxidizing agent such as hydrogen peroxide, ammonium persulfate or t-butylhydroperoxide, and a reducing agent such as L-ascorbic acid or its alkali metal salt, sodium sulfite or sodium thiosulfate. Most generally, an aqueous monomer solution containing an oxidizing agent and an aqueous monomer solution containing a reducing agent are made to separately flow out through the respective nozzles disposed above a granulation tower so that the two are made to collide with each other in air to thereby form droplets that contain the polymerization initiator composition comprising the oxidizing agent and the reducing agent. The droplets run down in the granulation tower with forming a water-absorbing resin particle precursor through polymerization, and drop down onto a fibrous substrate, for example, onto a nonevent fabric provided at the bottom of the granulation tower or onto scattering fibers that are supplied to the middle of the granulation tower, and they adhere to it. When fibers are supplied to the granulation tower so that they may run down through it while floating therein, then the water-absorbing resin particle precursor may be uniformly adhered to the individual fibers as a whole.

In case where the water-absorbing resin particle precursor is dropped down in a granulation tower so as to adhere it to a fibrous substrate in the manner as above, a part of the water-absorbing resin particle precursor may directly fix to the fibrous substrate but the remaining part thereof will drop down onto the water-absorbing resin particle precursor that has already fixed to the fibrous substrate, and the latter may indirectly fix to the fibrous substrate via the former. Preferably, the polymerization is effected at 20 to 100°C, and accordingly, the temperature in the granulation tower may be from 20 to 150°C, preferably from 25 to 100°C. The conversion to the water-absorbing resin particle precursor at the time when the precursor has been brought into contact with the fibrous substrate may be any one so far as the water-absorbing resin particle precursor can adhere to the substrate while it keeps its shape. In general, however, the conversion is preferably from 3% to 97%, more preferably from 10% to 95%, even more preferably from 15% to 95%. Preferably, the water-absorbing resin particle precursor is brought into contact with the substrate when its polymerization is as yet insufficient, since the fibers may cut into the water-absorbing resin particle precursor, as so mentioned hereinabove, and finally the resin particles may be more firmly fixed to the substrate. However, if the water-absorbing resin particle precursor is too soft, then it requires carefully handling since it could not keep its shape when the water-absorbing resin particle precursor is brought into contact with a fibrous substrate or with any other water-absorbing resin particle precursor.

The fibrous substrate for use in the invention may be any known one. In general, preferred are roughly-shaped fibers, or that is, dispersed fibers as they are, as well as fluff pulp or nonwoven fabric, in order that the resin particles may firmly fix to the substrate. The material of the substrate may be any of (semi)synthetic fibers such as polyester, polyolefin, acetate; inorganic fibers such as glass fibers; natural fibers such as pulp; regenerated fibers such as rayon. In general, preferred are synthetic fibers that may keep their strength even in wet, and pulp that may absorb water by itself. Preferably, the fiber diameter of the fibrous substrate is from 0.1 to 500 dtex. When the fibrous substrate for use herein is a nonwoven fabric, then its weight is preferably from 10 to 150 $g/m^2$, more preferably from 20 to 50 $g/m^2$.

The composite is produced generally in a continuous system. Briefly, an aqueous monomer solution is continuously fed to a nozzle disposed at the top of a granulation tower, and a fibrous material is also continuously fed to the tower in order that the water-absorbing resin article precursor that is dropping down in the tower while polymerizing therein may adhere to the substrate, and the substrate with the resin particle precursor adhering thereto is continuously taken out of the tower through the tower bottom. When the substrate is a flat shaped article such as nonwoven fabric, then it may be introduced into the bottom of the granulation tower to cross the bottom thereof, and may be taken out of it. On the other hand, when the substrate is fibers as they are, or that is, when the substrate is a non-shaped article, then a conveyor may be disposed to cross the bottom of a granulation tower and the fibers with resin particles adhering thereto may be deposited on it and may be taken out of the tower.

The water-absorbing resin particle precursor thus taken out of the granulation tower, as adhering to a fibrous substrate, is then reacted with a crosslinking agent whereby the surface of the resin particles is crosslinked.

The crosslinking agent for use herein may be any and every one known useful for the intended application, but is preferably a polyglycidyl compound having two or more glycidyl groups, more preferably an aliphatic polyalcohol polyglycidyl ether. For example, preferred for use herein are ethylene glycol diglycidyl ether, polyethylene glycol diglycidyl ether, glycerin diglycidyl ether, glycerin triglycidyl ether, polyglycerin polyglycidyl ether, propylene glycol diglycidyl ether, polypropylene glycol diglycidyl ether, pentaerythritol polyglycidyl ether. If desired, some of these may be combined for use herein. Above all, especially preferred are ethylene glycol diglycidyl ether, glycerin (di, tri)glycidyl ether.

The amount of the crosslinking agent to be used for the reaction may be generally from 50 to 10000 ppm by weight relative to the water-absorbing resin particles (dry weight). In general, when the amount is smaller than the range, then the surface crosslinking density will be too small, and if so, the absorbing capacity of the resin particles under pressure could not be at least 20 g/g, preferably at least 23 g/g. On the contrary, even if a larger amount of a crosslinking agent than the range is used, the water-absorbing capacity under pressure may change only a little. Preferably, the crosslinking agent is used in an amount of from 100 to 5000 ppm by weight, more preferably from 200 to 3000 ppm by weight relative to the water-absorbing resin particles formed (dry weight). In the invention, the crosslinking agent is added to the water-absorbing resin particle precursor as an aqueous solution thereof, generally as an aqueous solution thereof having a concentration of from 0.1% to 10% by weight. If the concentration of the aqueous crosslinking agent solution is higher than it, then the amount of the solution may be too small and the crosslinking agent will be difficult to uniformly apply to the surface of the water-absorbing resin precursor. On the contrary, if the concentration is lower than it, then the drying load in the subsequent step may be too great. Preferably, the concentration of the aqueous crosslinking agent solution is from 0.2% to 7% by weight, more preferably from 0. 5% to 5% by weight. The aqueous crosslinking solution may contain a surfactant for promoting the solubility and the dispersibility of the crosslinking agent and for promoting the diffusion of the crosslinking agent in the surface of the water-absorbing resin particle precursor when it is applied to the precursor. Preferably, the aqueous crosslinking agent is added to the water-absorbing resin particle precursor as fine particles thereof, or that is, by spraying. For promoting the diffusion of the aqueous crosslinking agent solution, added thereto, on the surface of the water-absorbing resin particle precursor, it is desirable that the water-absorbing resin particle precursor is swollen in some degree. However, if the precursor is swollen too much, then it is undesirable since the aqueous crosslinking agent solution may apt to penetrate into the depth of the water-absorbing resin particle precursor. In general, it is desirable that the water content of the water-absorbing resin particle precursor at the time when it is brought into contact with the aqueous crosslinking agent solution is from 20% to 80% by weight, more preferably from 20% to 60% by weight, even more preferably from 20% to 40% by weight.

The water content of the water-absorbing resin particle precursor may be controlled by drying or wetting. Preferably, the precursor is so prepared that it may have the above-mentioned water content at the time when it is taken out of a granulation tower. Accordingly, the concentration of the aqueous monomer solution to be fed into the granulation tower and the atmosphere in the tower is preferably so controlled that the water content of the water-absorbing resin particle precursor adhering to a fibrous substrate and taken out of the tower could fall within the above-mentioned range. In this description, the water content is in wet, and is obtained according to the following equation:

$$\texttt{(weight in wet - weight in dry)/(weight in wet)} \times \texttt{100 (\%)}.$$

In order that the crosslinking agent added to the water-absorbing resin particle precursor is not directly crosslinked before it diffuses on the surface of the resin particles, the temperature of the water-absorbing resin particles is 60°C or lower at the time when the aqueous crosslinking agent is added to the system in the invention. More preferably, the temperature is 50°C or lower, evenmore preferably 40°C or lower. In general, both the water-absorbing resin particle precursor and the aqueous crosslinking agent solution are kept at 60°C or lower. More preferably, the temperature is 50°C or lower, even more preferably 40°C or lower.

After the aqueous crosslinking agent is added to the water-absorbing resin particle precursor, the system is heated to undergo crosslinking reaction and a crosslinking structure is thereby formed on the surface of the resin particles. The heating is effected by exposing the precursor composite to an atmosphere at 90°C or higher within a period of time when the added aqueous crosslinking solution may diffuse to be uniformly distributed on the surface of the resin particle precursor but does not diffuse so much into the depth of the precursor, or that is, within 2 minutes after the addition of the aqueous crosslinking agent solution. Accordingly, the crosslinking agent may be reacted substantially only on the surface of the water-absorbing resin particle precursor, and the formation of crosslinking in the depth of the precursor may be prevented. If the crosslinking is effected after a long period of time after the addition of the aqueous crosslinking agent solution, then much crosslinking may be formed inside the particles and, as a result, the water-holding capacity of the resin particles may lower. Preferably, the crosslinking reaction is effected while water is evaporated away from the water-absorbing resin particle precursor, and accordingly in that condition, the crosslinking agent may be prevented from penetrating into the depth of the water-absorbing resin particle precursor during heating. Preferably, the water content of the water-absorbing resin particle precursor may be at most 15% by weight within 10 minutes after the start of the heating. More preferably, the water content may be at most 15% by weight within 7 minutes after the start of the heating, even more preferably within 5 minutes.

Preferably, the heating is effected with hot air. The temperature of the hot air may be 90°C or higher, preferably 120°C or higher, more preferably 130°C or higher. If it is lower than 90°C, then the crosslinking reaction could not occur sufficiently. On the contrary, if the temperature of the hot air is over 250°C, then the resin may decompose and the product quality may lower. Preferably, the temperature of the hot air is 200°C or lower, more preferably 180°C or lower. The hot air may contain water vapor. The heating with such hot air may remove the unreacted monomer from the water-absorbing resin particle precursor. In case where the water-absorbing composite contains an unreactedmonomer, then it maybe a bar to the practical use of the composite product. Accordingly, the monomer content of the composite is reduced in various methods of extraction with organic solvent, reaction with catalyst addition, or diffusion with aeration. For example, aeration with hot air that runs through the nonwoven fabric or the fiber deposit with resin particles adhering thereto during surface crosslinking may attain the reduction in the unreacted monomer content of the product simultaneously with the surface crosslinking.

According to the production method of the invention, a water-absorbing composite that comprises a fibrous substrate and water-absorbing resin particles fixing to it and having a water-holding capacity of at least 30 g/g and a water-absorbing capacity under pressure of at least 20 g/g can be produced efficiently. Preferably, the water-holding capacity of the water-absorbing resin particles is at least 33 g/g; and the water-absorbing capacity under pressure thereof is preferably at least 23 g/g. Both the water-holding capacity and the water-absorbing capacity under pressure of the water-absorbing resin particles are preferably larger. At present, however, a water-holding capacity of larger than 60 g/g and a water-absorbing capacity under pressure of larger than 50 g/g are almost impossible. Preferably, the difference between the water-holding capacity and the water-absorbing capacity under pressure is at most 15 g/g, more preferably at most 12 g/g. If the difference is too large, then the resin particles having absorbed water and having swollen may be apt to release water when pressed, and paper diapers comprising the water-absorbing composite of the type may be unpleasant to their wearers.

Though not limitative, the content (dry weight) of the water-absorbing resin particles in the water-absorbing composite may be from 10 to 1000 g/m$^2$, preferably from 50 to 600 g/m$^2$ for application to paper diapers, more preferably from 100 to 500 g/m$^2$. The content of the water-absorbing resin particles may be obtained by subtracting the weight of a dried fibrous substrate from the weight of a dried water-absorbing composite. Concretely, the weight (g/m$^2$) of a fibrous substrate dried with hot air at 110°C for 1 hour is previously measured, and a water-absorbing resin particle precursor being polymerizing is adhered to the fibrous substrate according to the method mentioned above, then this is subjected to surface crosslinking to produce a water-absorbing composite. This is dried with hot air at 110°C for 1 hour, and its weight (g/m$^2$) is measured. The former weight is subtracted from the latter weight, and the content (g/m$^2$) of the water-absorbing resin particles is thus computed. Similarly, the water-holding capacity and the water-absorbing capacity under pressure may be obtained by subtracting the measured value of the fibrous substrate from the measured value of the composite.

The method for producing a water-absorbing composite of the invention is described in detail hereinunder. In this description, the numerical range expressed by the wording "a number to another number" means the range that falls between the former number indicating the lowermost limit of the range and the latter number indicating the uppermost limit thereof.

(Example 1)

57.3 parts by weight of aqueous 48.5 wt. % sodium hydroxide solution, 6.4 parts by weight of water, 0.15 parts by weight of a crosslinking agent (N,N'-methylenebisacrylamide) and 5.0 parts by weight of aqueous 30 wt.% hydrogen peroxide solution were added to 125 parts by weight of aqueous 80 wt.% acrylic acid solution to prepare a solution A. The monomer concentration of the solution A was 60% by weight, and the degree of neutralization thereof was 50 mol%.

Apart from it, 57.3 parts by weight of aqueous 48.5 wt.% sodium hydroxide solution, 9.9 parts by weight of water, 0.15 parts by weight of a crosslinking agent (N,N'-methylenebisacrylamide) and 1.5 parts by weight of ascorbic acid were added to 125 parts by weight of aqueous 80 wt.% acrylic acid solution to prepare a solution B. The monomer concentration of the solution B and the degree of neutralization thereof were the same as those of the solution A.

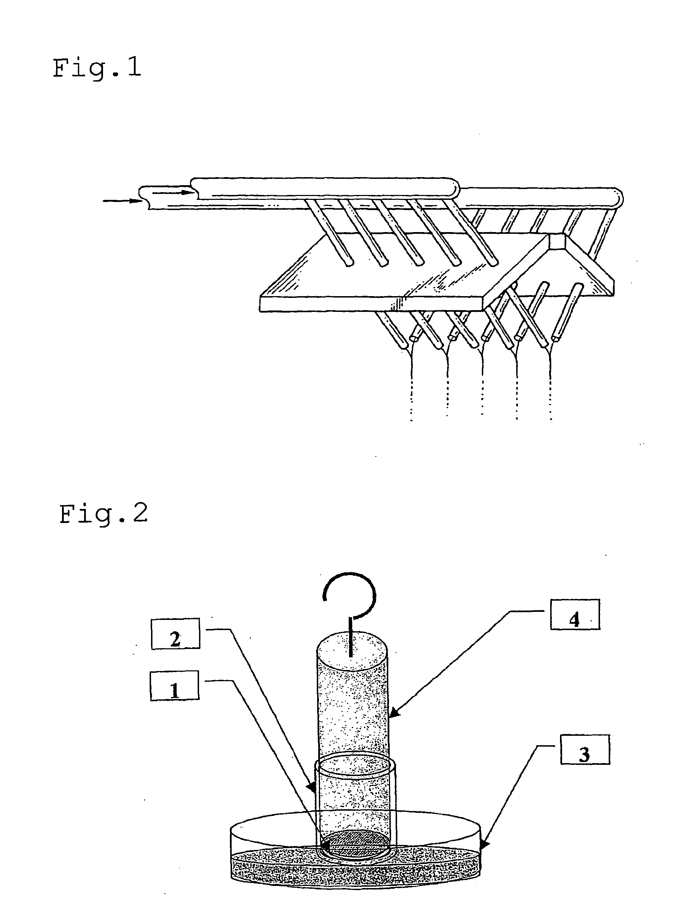

Thus prepared, the solution A and the solution B were mixed, using nozzles shown in Fig. 1. The nozzles in Fig. 1 all have an inner diameter of 0.13 mm, and five nozzles for each solution are disposed at intervals of 1 cm. The crossing angle at which the solution A and the solution B running out from the nozzles cross each other is 30 degrees, and the distance between the tips of each nozzle pair is 4 mm. The solution A and the solution B were warmed at 40°C, and were fed to the nozzles to run out at a flow rate of 5 m/sec, via a pump.

The solutions running out from the respective nozzles met in air to form droplets, which run down in a granulation tower with polymerizing therein, and dropped onto a fibrous substrate (nonwoven fabric of polyester having a fiber diameter of 67 dtex and a weight of 30 g/m2 ) moving at 0.05 m/min at 3 m below the nozzle tips, thereby forming a precursor composite of a water-absorbing resin particle precursor (water content, 35%) adhering to the polyester nonwoven fabric.

Aqueous 0.5 wt.% glycerin polyglycidyl ether (epoxy equivalent, 145) solution (room temperature) was sprayed on the precursor composite (temperature, 45°C) in such a manner that the glycerin polyglycidyl ether could be 500 ppm by weight (based on dry resin) of the water-absorbing resin particles being formed, and after 1 minute, this was crosslinked in an aeration band drier in which air at 130°C was running through the fibrous substrate of the precursor composite. In about 2 minutes after it was put into the drier, the water content of the water-absorbing resinparticles loweredto 15% by weight. The heating was further continued, and the heating was stopped when the water content reached about 5% by weight, and the system was then gradually cooled to obtain a water-absorbing composite. Thus obtained, the content of the water-absorbing resin particles (dry weight) in the water-absorbing composite was 300 g/m$^2$ .

(Example 2)

Awater-absorbing composite was produced in the same manner as in Example 1, for which, however, the aqueous 0.5 wt.% glycerin polyglycidyl ether solution was so sprayed that the spray amount of glycerin polyglycidyl ether could be 1000 ppm by weight of the water-absorbing resin particles.

(Example 3)

Awater-absorbing composite was produced in the same manner as in Example 1, for which, however, aqueous 0.5 wt.% ethylene glycol diglycidyl ether solution was used in place of the aqueous glycerin polyglycidyl ether solution, and it was so sprayed that the spray amount of ethylene glycol diglycidyl ether could be 1000 ppm by weight of the water-absorbing resin particles.

(Example 4)

A water-absorbing composite was produced in the same manner as in Example 3, for which, however, the aqueous 0.5 wt. % ethylene glycol diglycidyl ether solution was so sprayed that the spray amount of ethylene glycol diglycidyl ether could be 2000 ppm by weight of the water-absorbing resin particles.

(Example 5)

Awater-absorbing composite was produced in the same manner as in Example 1, for which, however the temperature of the air running in the drier was 100°C and the water content of the water-absorbing resin was lowered to 15% by weight within about 30 minutes after the precursor was put into the drier.

(Example 6)

Awater-absorbing composite was produced in the same manner as in Example 1, for which, however, the aqueous 0.5 wt. % glycerin polyglycidyl ether solution was so sprayed that the spray amount of glycerin polyglycidyl ether could be 2000 ppm by weight of the water-absorbing resin particles.

(Comparative Example 1)

Awater-absorbing composite was produced in the same manner as in Example 1, for which, however, the precursor was put into the drier after 30 minutes after the spraying.

(Comparative Example 2)

A water-absorbing composite was produced in the same manner as in Example 1, for which, however, the precursor in Example 5 was put into the drier after 30 minutes after the spraying.

(Test Example)

The water-absorbing composites produced in Examples 1 to 6 and Comparative Examples 1 and 2 were analyzed for their water-holding capacity and water-absorbing capacity under pressure, according to the methods mentioned below.

<1> Method for Determining Water-Holding Capacity:

A water-absorbing composite dried at 110°C for 30 minutes was cut into a piece in which the weight of the water-absorbing resin fixing to the water-absorbing composite could be about 1 g, and its weight ($W_1$) was measured. This was put into a 250-mesh nylon bag (20 cm x 10 cm) , and dipped in 500 ml of physiological saline (concentration, 0.9% by weight) at room temperature for 30 minutes. Next, the nylon bag was pulled up, and hung as such for 15 minutes to remove water, and then this was further dewatered by the use of a centrifuge at 90 G for 90 seconds. On the other hand, the same fibrous substrate as that used in producing the water-absorbing composite was dried at 110°C for 30 minutes and then cut into a piece having the same size as that of the water-absorbing composite piece and its weight ($W_2$) was measured, in the same manner as above. Also in the same manner as above, this was put into a 250-mesh nylon bag (20 cm x 10 cm) , and dipped in 500 ml of physiological saline (concentration, 0.9% by weight) at room temperature for 30 minutes. Next, the nylon bag was pulled up, hung for 15 minutes to remove water, and then this was further dewatered by the use of a centrifuge at 90 G for 90 seconds. The weight ($W_3$) of the dewatered, water-absorbing composite-containing nylon bag and the weight ($W_4$) of the dewatered, fibrous substrate-containing nylon bag were measured. The water-holding capacity was computed according to the equation mentioned below, in which the unit of $W_1$ to $W_4$ is "g".

$$S = (W_3 - W_4)/(W_1 - W_2).$$

<2> Method for Determining Water-Absorbing Capacity under pressure:

Using a device shown in Fig. 2, the water-absorbing capacity under pressure was determined according to the process mentioned below. The measuring device comprises a metal cylinder 2 (inner diameter, 25.4 mmφ) bottomed with a metal gauze (#100), a columnar weight 4 having an inner diameter somewhat smaller than that of the cylinder, and a laboratory dish 3.

1) A water-absorbing composite dried at 110°C for 30 minutes was blanked to give a sample disc 1 (25 mmφ), using a blanking punch (25 mmφ).

2) The weight Sd (g) of the sample disc 1, and the weight Td (g) of the metal gauze-fitted cylinder were measured.

3) 25 g of an artificial urine at room temperature was put into the dish 3 (100 mmφ).

4) The sample disc 1 was inserted into the metal gauze-fitted cylinder tube 2 in such a manner that the side of the fibrous substrate thereof could face the metal gauze.

5) The weight of 100 g was put on the sample disc. In this stage, the weight was carefully put on it so as not to be in contact with each other to cause a friction during the elevation of the weight through water absorption of the sample disc.

6) The cylinder 2 with the sample disc 1 and the weight 4 put therein was gently dipped in the dish 3 in such a manner that the metal gauze could face downward.

7) The sample was left as such for water absorption for 1 hour.

8) The cylinder 2 was gently taken out of the dish 3.

9) The cylinder 2 was gently put on filter paper (#424) and water adhering to the cylinder 2 was wiped off.

10) The weight 4 was removed (the water-absorbing resin adhering to the weight 4 was transferred to the side of the cylinder 2).

11) The weight Tw (g) of the cylinder 2 was measured.

12) The weight Sw (g) of the sample disc 1 having absorbed water was obtained according to the following equation:

$$Sw = Tw - Td.$$

13) The same fibrous substrate as that used in producing the water-absorbing composite was used in place of the water-absorbing composite, from which a reference sample disc was prepared quite in the same manner as above, and this was tested for water absorption. The weight Nd (g) of the reference sample disc and the weight Mw (g) of the cylinder after water absorption were measured, and the weight Nw (g) of the reference sample disc having absorbed water was obtained according to the following equation:

$$Nw = Mw - Td.$$

14) The water-absorbing capacity under pressure of the sample was computed according to the following equation:

$$\text{Water-Absorbing Capacity under pressure (AUL) (g/g)} = (Sw - Nw)/(Sd - Nd).$$

The artificial urine used herein had the following composition:

| | |
|---|---|
| Urea | 19.4 g |
| Sodium Chloride | 8.0 g |
| Calcium Chloride (anhydrous) | 0.6 g |
| Magnesium Sulfate (7 hydrate) | 2.05 g |
| Pure Water | 970 g |

<3> Test Results:

The test results of each water-absorbing composite are shown in the following table.

Table 1

|  | Water-Holding Capacity (g/g) | Water-Absorbing Capacity under pressure (g/g) |
|---|---|---|
| Example 1 | 35 | 25 |
| Example 2 | 35 | 25 |
| Example 3 | 35 | 25 |
| Example 4 | 35 | 25 |
| Example 5 | 34 | 25 |
| Example 6 | 34 | 25 |
| Comparative Example 1 | 28 | 25 |
| Comparative Example 2 | 27 | 25 |

The above table confirms that the water-absorbing composites of the invention (Examples 1 to 6) have a sufficient water-absorbing capacity under pressure and have an excellent water-holding capacity.

INDUSTRIAL APPLICABILITY OF THE INVENTION

According to the production method of the invention, a water-absorbing composite having a great water-absorbing capacity under no pressure and even under pressure can be produced, using a crosslinking agent as an aqueous solution thereof. Accordingly, the production method of the invention is suitable to industrial application and is suitable to mass-production of water-absorbing composites having excellent functions.

**Claims**

1.   A method for producing a water-absorbing composite comprising a fibrous substrate and water-absorbing resin particles fixed thereto; the method comprising bringing droplets of an aqueous solution of a polymerizable monomer into contact with a fibrous substrate with polymerizing the monomer to thereby form a precursor composite comprising a water-absorbing resin particle precursor fixed to the fibrous substrate, then adding thereto an aqueous solution of a crosslinking agent in such a manner that the temperature of the water-absorbing resinparticle precursor is 60°C or lower after the addition, and heating the precursor composite in an atmosphere at 90°C or higher within 2 minutes after the addition to thereby crosslink the precursor.

2.   The method for producing a water-absorbing composite according to claim 1, wherein the aqueous crosslinking solution is added in such a manner that the temperature of the water-absorbing resin particle precursor is 50°C or lower after the addition.

3.   The method for producing a water-absorbing composite according to claim 1 or 2, wherein the aqueous crosslinking agent solution is added to the water-absorbing resin particle precursor having a water content of from 20% to 80% by weight.

4.   The method for producing a water-absorbing composite according to any one of claims 1 to 3, wherein the addition of the aqueous crosslinking agent solution to the water-absorbing resin particle precursor is effected by spraying the aqueous crosslinking agent solution on the water-absorbing resin particle precursor.

5.   The method for producing a water-absorbing composite according to any one of claims 1 to 4, wherein the crosslinking reaction by heating the water-absorbing resin particle precursor after the addition of the aqueous crosslinking agent solution thereto, in an atmosphere at 90°C or higher is attained under a condition under which water may evaporate away from the water-absorbing resin particle precursor so that the water content of the water-absorbing resin particle precursor is lowered to at most 15% by weight within 10 minutes after the start of the heating.

6.   The method for producing a water-absorbing composite according to any one of claims 1 to 5, wherein the crosslinking agent is a polyglycidyl compound.

Fig.1

Fig.2

## INTERNATIONAL SEARCH REPORT

| International application No. |
|---|
| PCT/JP2004/007144 |

**A. CLASSIFICATION OF SUBJECT MATTER**
Int.Cl⁷ C08F2/00, A61F13/53

According to International Patent Classification (IPC) or to both national classification and IPC

**B. FIELDS SEARCHED**

Minimum documentation searched (classification system followed by classification symbols)
Int.Cl⁷ C08F2/00, A61F13/53

Documentation searched other than minimum documentation to the extent that such documents are included in the fields searched
Jitsuyo Shinan Koho         1922–1996    Jitsuyo Shinan Toroku Koho    1996–2004
Kokai Jitsuyo Shinan Koho   1971–2004    Toroku Jitsuyo Shinan Koho    1994–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-2905 A (Mitsubishi Chemical Corp.), 08 January, 2003 (08.01.03), Par. Nos. [0034], [0036], [0041] (Family: none) | 1-6 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 June, 2004 (29.06.04) | 13 July, 2004 (13.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)